# EUROPEAN PATENT APPLICATION

(11) **EP 4 691 754 A1**
(43) Date of publication of application: **11.02.2026**
(21) Application number: 25178740.4
(22) Date of filing: 26.05.2025
(51) Int. Cl.: B32B 3/12, B23K 26/34, B32B 7/12, B32B 9/00, B32B 15/04, B32B 15/08, B32B 15/10, B32B 15/14, B32B 15/18, B32B 15/20

(54) **METHOD FOR PRODUCING EDGED SANDWICH PANELS, EDGED SANDWICH PANEL AND EDGE BANDING MACHINE**

(30) Priority: 06.08.2024 IT 202400018505
(71) Applicant: 3B Lab S.r.l., 22075 Lurate Caccivio (CO) (IT)
(72) Inventor: BOTTA, Alberto, 22075 Lurate Caccivio (CO) (IT); PACCHETTI, Patrick, 22075 Lurate Caccivio (CO) (IT)
(74) Representative: Studio Torta S.p.A.

(57) **Abstract**

A method is described for producing edged sandwich panels (5) from a semi-finished sandwich panel (1) having at least a first metal layer (2), a second metal layer (3) and an inner core (4) interposed between the first metal layer (2) and the second metal layer (3). The method comprises a surface fusion step, during which a first zone (17) of an edge band strip (8), a second zone (18) of the first metal layer (2), a third zone (19) of the edge band strip (8) and a fourth zone (20) of the second metal layer (3) are superficially fused by laser radiation; and a pressure contact step during which the first zone (17) and the third zone (19) of the edge band strip (8) are brought into contact, respectively, with the second zone (18) of the first metal layer (2) and the fourth zone (20) of the second metal layer (3). During the surface fusion step a first laser beam (12) and a second laser beam (13) are emitted, focused on a first cavity (15) and a second cavity (16) respectively.

## Description

### CROSS-REFERENCE TO RELATED APPLICATIONS

This patent application claims priority from Italian patent application no. 102024000018505 filed on August 6,2024, the entire disclosure of which is incorporated herein by reference.

### TECHNICAL FIELD

The present invention relates to a method for producing edged sandwich panels having at least a first metal layer, a second metal layer, a core interposed between the first metal layer and the second metal layer and a metallic perimeter edge band connected to the first metal layer and to the second metal layer.

The present invention also relates to a sandwich panel having at least a first metal layer, a second metal layer, a core interposed between the first metal layer and the second metal layer and a metallic perimeter edge band connected to the first metal layer and to the second metal layer and being produced by means of the method.

The present invention also relates to an edge banding machine for producing sandwich panels from a semi-finished sandwich panel.

### BACKGROUND TO THE INVENTION

Sandwich panels are known which comprise a first metal layer, a second metal layer, a core interposed between the first metal layer and the second metal layer and a metallic perimeter edge band glued to the first metal layer, to the second metal layer and to the core where possible.

Such edged sandwich panels are produced from a semi-finished sandwich panel comprising the first metal layer, the second metal layer and the core interposed between the first metal layer and the second metal layer. Said semi-finished sandwich panel is without a perimeter edge band, namely the outer perimeter between the first metal layer and the second metal layer is open.

To obtain the edged sandwich panel, an edge band strip made of a metallic material is glued laterally on the semi-finished sandwich panel. Examples of methods are described, for example, in CN-A-114801211 and CN-U-204820519.

CN-A-114801211 describes a method in which an edge band strip is used which is applied to the semi-finished sandwich panel, the edge band strip being provided with an adhesive covering which is activated by means of a laser beam prior to contact with the semi-finished sandwich panel.

A variation described in CN-U-204820519 is similar to the solution described in CN-A-114801211 since the adhesive is activated by a laser beam. Another variation described in CN-U-204820519 describes the use of a hot melt adhesive.

Although the known edged sandwich panels allow high performance, the need is felt in the sector for improved edged sandwich panels.

In particular, the need is felt to produce edged sandwich panels without the use of adhesives.

The need is also felt to obtain edged sandwich panels that allow surface treatments with a minimized risk of delamination of the lateral edges.

Furthermore, the need is also felt to obtain edged sandwich panels that allow surface treatments on the edged sandwich panel, thanks to the continuity of material between the outer layer and edge, without a gluing line.

Lastly, the need is also felt to provide an edge banding machine for producing sandwich panels without the use of adhesives.

### DESCRIPTION OF THE INVENTION

The object of the present invention is to provide an improved method that allows the production of edged sandwich panels.

A further object of the present invention is the production of improved edged sandwich panels.

A further object of the present invention is to provide for an improved edge banding machine.

The above-mentioned objects are achieved by the present invention, since it concerns the method as defined in the independent claim. Alternative preferred embodiments are protected in the respective dependent claims.

The above-mentioned objects are achieved by the present invention, since it concerns an edged sandwich panel according to claim 12.

The above-mentioned objects are achieved by the present invention, since it concerns an edge banding machine according to any one of the claims from 13 to 15.

### BRIEF DESCRIPTION OF THE FIGURES

The present invention will now be described with reference to the attached drawings relative to non-limiting embodiment examples, in which:
- Figure 1 schematically illustrates a semi-finished sandwich panel, with parts removed for clarity;
- Figure 2 schematically illustrates an edged sandwich panel;
- Figure 3A schematically illustrates a machine for execution of the method according to a first embodiment according to the present invention, with parts removed for clarity;
- Figure 3B is an enlarged view of a detail of Figure 3A, with parts removed for clarity;
- Figure 3C is an enlarged view of a detail of Figure 3A and from a different angle with respect to that of Figure 3B, with parts removed for clarity;
- Figure 4 schematically illustrates edged sandwich panels of different shapes; and
- Figure 5 schematically illustrates a machine for the execution of the method according to a second embodiment according to the present invention, with parts removed for clarity.

### PREFERRED EMBODIMENTS OF THE INVENTION

The elements and characteristics illustrated in the various preferred embodiments, including the drawings, can be combined with one another without departing from the protective scope of the present application as described below.

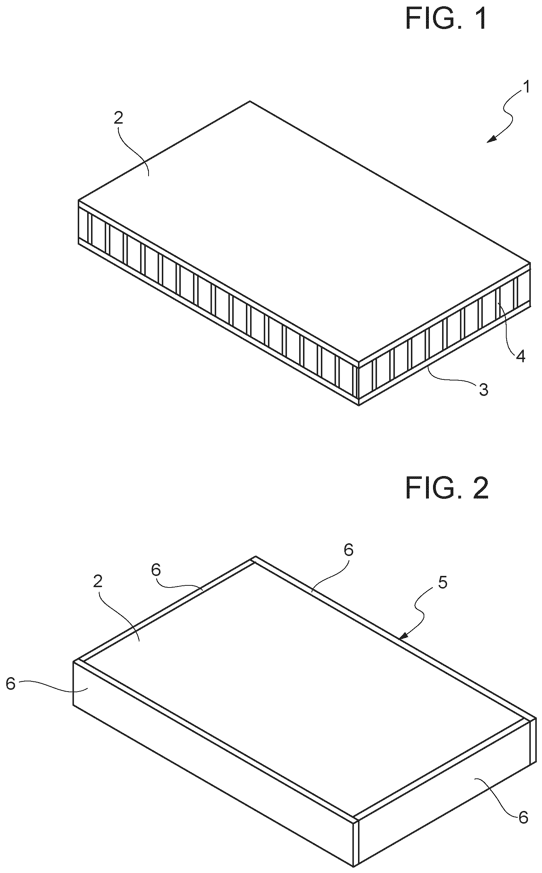

With reference to Figure 1, the number 1 indicates a semi-finished sandwich panel 1.

The semi-finished sandwich panel 1 comprises a first metal layer 2, a second metal layer 3 and an inner core 4 interposed between the first metal layer 2 and the second metal layer 3. In particular, the first metal layer 2 and the second metal layer 3 are connected to the inner core 4. More in particular, the first metal layer 2 and the second metal layer 3 are mounted on the inner core 4.

In further detail, the inner core 4 comprises a first face and a second face opposite the first face.

The first layer 2 and the second layer 3 are (permanently) connected to the inner core 4, in particular by means of an adhesive layer or interface, more specifically and respectively to the first face and second face.

In the case illustrated, the first metal layer 2 and the second metal layer 3 define outer layers of the semi-finished sandwich panel 1.

In further detail, the first metal layer 2 and the second metal layer 3 can have a thickness in a range between 0.2 mm and 5.0 mm, in particular a range between 0.5 mm and 2.0 mm.

The core 4 can have a thickness in a range between 2 mm and 120 mm, more in particular between 6 mm and 100 mm.

Each of the first layer 2, the second layer 3 and the edge band strip 8 comprises a metal chosen from the group comprising aluminium, aluminium alloys, brass, steel, steel alloys, titanium, copper and bronze.

In particular, the inner core 4 can comprise a metal material, a metal honeycomb structure, an expanded foam, a thermoplastic, a thermoset, an open-cell structured foam, a closed-cell structured foam, a balsa wood, a syntactic foam, ceramic materials, aramid fibres and/or foams, a self-expanding component and/or a honeycomb structure, for example made of any other material from those listed above.

For example, the core 4 can be made only of a metallic material (such as, for example, aluminium) and have a honeycomb structure.

According to the present invention, a method is provided for obtaining an edged sandwich panel 5 by means of an edge banding process of the semi-finished sandwich panel 1.

Figure 2 schematically illustrates such an edged sandwich panel 5. The edged sandwich panel 5 comprises not only the first metal layer 2, the inner core 4 and the second metal layer 3 but also a metallic perimeter edge band 6.

As explained below, the method comprises welding of the metallic perimeter edge band 6 to the first metal layer 2 and to the second metal layer 3, in particular without obtaining a weld between the metallic perimeter edge band 6 and the inner core 4.

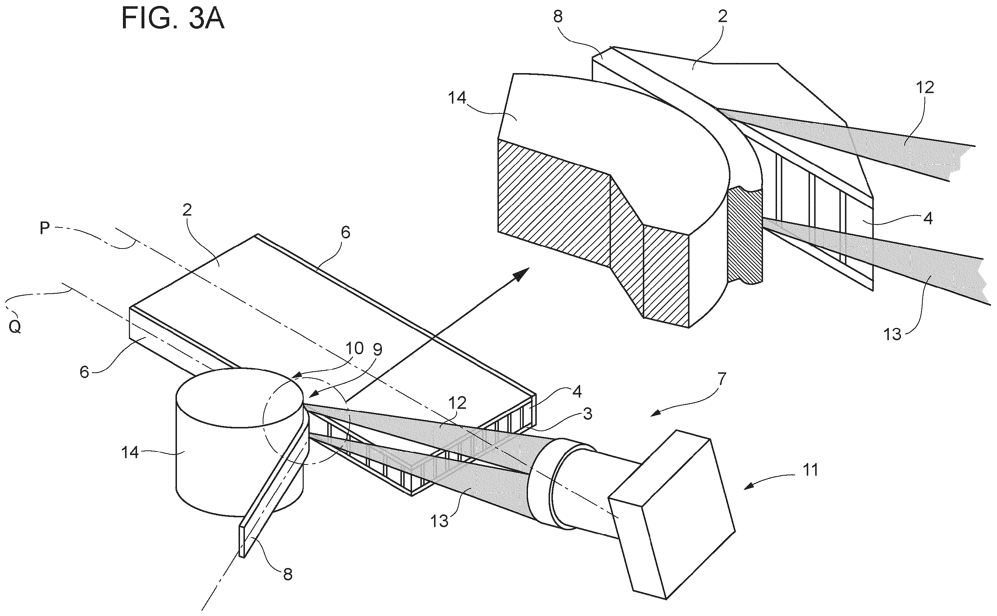

The method can be carried out by an edge banding machine 7 as illustrated in Figure 3A.

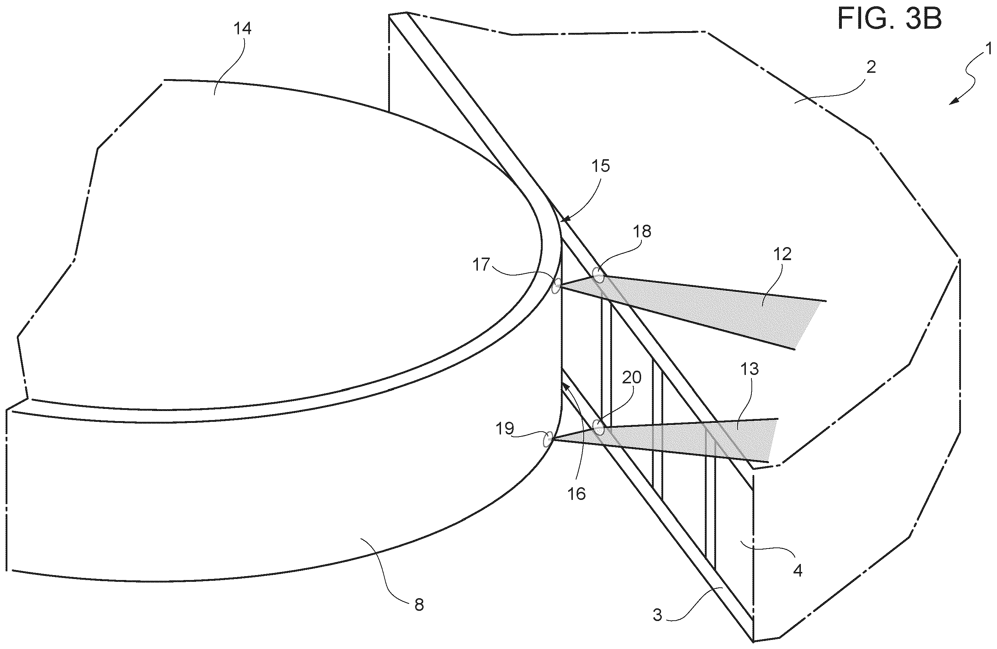

The method comprises, as schematically illustrated in Figures 3A and 3B:
- a surface fusion step, during which a first zone 17 of a metal edge band strip 8, a second zone 18 of the first metal layer 2, a third zone 19 of the edge band strip 8 and a fourth zone 20 of the second metal layer 3 are superficially fused by laser radiation, in particular at an irradiation station 9; and
- a pressure contact step, in particular carried out following the surface fusion step, during which the first zone 17 and the third zone 19 of the edge band strip 8 are brought into contact, in particular at a contact station 10, respectively, with the second zone 18 of the first metal layer 2 and with the fourth zone 20 of the second metal layer 3.

Preferably but not necessarily, each first zone 17 and each second zone 18 face each other, in particular prior to their contact, and each third zone 19 and each fourth zone 20 face each other, in particular prior to their contact.

In particular, according to the embodiment illustrated in Figures 3A and 3B, each first zone 17 and each third zone 19 are located on an inner surface of the edge band strip 8 which faces the semi-finished sandwich panel, each second zone 18 is located on a perimeter edge band of the first metal layer 2 which faces the edge band strip 8 and each fourth zone 20 is located on a perimeter edge band of the second metal layer 3 which faces the edge band strip 8.

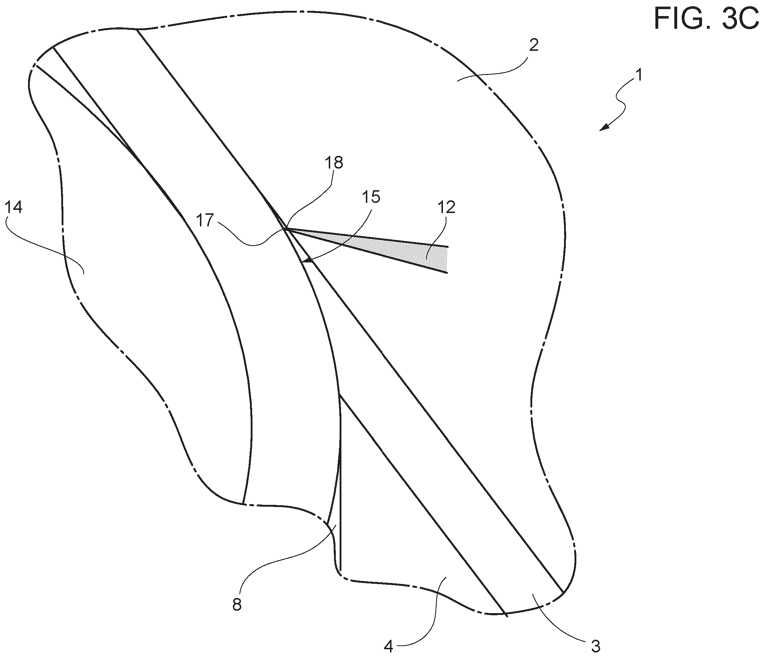

It should be noted that in Figure 3B the first zone 17, the second zone 18, the third zone 19 and the fourth zone 20 are illustrated schematically. It should be noted that during execution of the method, the respective positions are nearer the contact point between the edge band strip 8 and the semi-finished panel 1, but in order to better exemplify the concept, the positions have been indicated differently. In particular, Figure 3C is a representation with a different angle from that of Figure 3B so as to schematically illustrate that the first zone 17, the second zone 18, the third zone 19 and the fourth zone 20 are nearer the contact point between the edge band strip 8 and the semi-finished panel 1 than that of Figure 3B.

In particular, following the welding, the first zones 17, the second zones 18, the third zones 19 and the fourth zones 20 are no longer visible.

In particular, the surface fusion step and the contact step allow the creation of a weld between each first zone 17 and the respective second zone 18 and between each third zone 19 and the respective fourth zone 20.

In particular, thanks to the surface fusion step and the pressure contact step, the formation of respective welded joints between the first zone 17, the third zone 19, the second zone 18 and the fourth zone 20 is guaranteed, thanks to the fact that the first zone 17, the second zone 18, the third zone 19 and the fourth zone 20 fuse and the respective contacts are established.

In particular, the first zone 17 and the third zone 19 of the edge band strip 8 are opposite each other.

In particular, each first zone 17 and the respective third zone 19 are spaced from each other in a transverse direction.

As illustrated below, the method is carried out continuously to create a continuous weld between the edge band strip 8 and the first metal layer 2 and the second metal layer 3.

Advantageously, to obtain a continuous weld, the method also comprises inducing a relative movement between the laser radiation, the semi-finished sandwich panel 1 and the edge band strip 8.

In particular, the surface fusion step and the contact step are repeated, in particular while the relative movement between the laser radiation and the semi-finished sandwich panel 1 is induced. In this way a plurality of first zones 17, second zones 18, third zones 19 and fourth zones 20 are created.

According to the embodiment of Figures 3A and 3B, the relative movement can occur thanks to a movement of the semi-finished sandwich panel 1. Alternatively or additionally, it is possible to induce a movement of the laser radiation (keeping the semi-finished sandwich panel 1 still).

Advantageously and with reference to Figures 3A and 3B, the method also comprises a feeding step, during which an edge band strip 8 made of metal material is fed to a contact station 10 in the area of which the edge band strip 8 is brought into contact with the first metal layer 2 and the second metal layer 3.

According to some embodiments, the method also comprises an advancement step, during which the semi-finished sandwich panel 1 is advanced along an advancement path P, and in particular through the irradiation station 9 and the contact station 10.

In particular, the advancement step allows the relative movement between the laser radiation, the semi-finished sandwich panel 1 and the edge band strip 8 to be induced.

In particular, the irradiation station 9 is arranged upstream of the contact station 10 along the advancement path P. In this way it is guaranteed that each first zone 17, each second zone 18, each third zone 19 and each fourth zone 20 are firstly fused superficially and then the desired contacts are established between each first zone 17 and the respective second zone 18 and between each third zone 19 and the respective fourth zone 20.

Preferably but not necessarily, the advancement path P is rectilinear.

In further detail, during the feeding step, the edge band strip 8 is advanced along an auxiliary path Q, and in particular is conveyed in the area of and through the irradiation station 9 and the contact station 10.

In particular, the auxiliary path Q is at least partially defined with the aid of a positioner/conveyor roller (not illustrated) of the edge banding machine 7. In particular, the positioner/conveyor roller is arranged upstream of the contact station 10 along the auxiliary path Q. In particular, the positioner/conveyor roller guarantees the formation of a given angle between the edge band strip 8 and semi-finished sandwich panel 1 at the contact station 10.

In this way both an irradiation and an optimized contact is obtained between each first zone 17 and the respective second zone 18 and between each third zone 19 and the respective fourth zone 20.

In particular, a portion of the auxiliary path Q which extends downstream of the contact station 10 is parallel to a respective portion of the advancement path P which extends downstream of the contact station 10.

Advantageously, the feeding step of the edge band strip 8, the surface fusion step, the contact step and in particular also the advancement step of the semi-finished panel 1 are carried out continuously. In this way two elongated joints are created (in particular a first continuous perimeter welding and a second continuous perimeter welding), a joint (namely the first continuous perimeter welding) between the first metal layer 2 and the edge band strip 8 and another joint (the second continuous perimeter welding) between the second metal layer 3 and the edge band strip 8.

In other words, with the advancement of the semi-finished sandwich panel 1 along the advancement path P, a plurality of second zones (interconnected with one another) and a plurality of fourth zones (interconnected with one another) are created, and with the advancement of the edge band strip 8, a plurality of first zones (interconnected with one another) and a plurality of fourth zones (interconnected with one another) are created.

In particular, the plurality of first zones defines a respective continuous line of the first zones and forms, together with a respective continuous line of the second zones, the respective joint, and a respective continuous line of the third zones forms, together with a respective continuous line of the fourth zones, another respective joint.

In particular, the plurality of second zones and the plurality of fourth zones are distributed along at least a portion of the perimeter of the first metal layer 2 and a portion of the perimeter of the second metal layer 3 respectively.

It should be noted that alternatively or additionally to the advancement step and to the feeding step, it is possible to modify (continuously) the position of the irradiation station 9 (which in the specific example illustrated in Figure 3A is fixed). In other words, it is possible to modify the position of the laser radiation to induce a relative movement between the laser radiation and the semi-finished panel 1 and the edge strip band 8. Also in this case it is possible to obtain continuous elongated joints (continuous perimeter weldings).

According to the alternative of the modification (continuous) of the position of the irradiation station 9, the feeding step is carried out, while an advancement step is not carried out (in fact, according to said alternative, the semi-finished sandwich panel 1 is fixed, namely during the edge banding, the semi-finished sandwich panel 1 is kept in a fixed position).

In particular, according to this alternative, the effect that is obtained from the advancement step is obtained due to the modification (continuous) of the position of the irradiation station 9, namely the first continuous perimeter welding and the second continuous perimeter welding are obtained due to the modification of the position of the irradiation station 9. In particular, the modification (continuous) is carried out so that the irradiation station 9 moves along the perimeter of the semi-finished sandwich panel 1.

Therefore, due to the modification (continuous) of the position of the irradiation station 9, the plurality of second zones (interconnected with one another) and the plurality of fourth zones (interconnected with one another) are created, and with the advancement of the edge band strip 8, the plurality of first zones (interconnected with one another) and the plurality of fourth zones (interconnected with one another) are created.

According to this embodiment, the method also comprises a blocking step, during which the semi-finished sandwich panel 1 is blocked, in particular by means of a suction force.

In particular, the edge banding machine can comprise a blocking device configured to block the semi-finished sandwich panel 1. Preferably, the blocking device can comprise a suction unit configured to generate a suction force on the semi-finished sandwich panel 1.

With particular reference to Figures 3A and 3B, during the surface fusion step the laser radiation is emitted from a laser device 11 (of the edge banding machine 7), preferably but not necessarily a fibre laser device 11.

In particular, the laser device 11 can comprise one or more laser emission heads 25.

According to some non-limiting embodiments, the laser device 11 is fixed, namely its position is not modified during execution of the method.

In particular, the irradiation station 9 is fixed. In particular, the continuity of the welding is guaranteed by the advancement of the semi-finished sandwich panel 1 and by the advancement of the edge band strip 8.

In this way, the precision of the welding is guaranteed in a simple manner.

Alternatively, the laser device 11 is provided with means that allow modification (continuous) of the irradiation station 9. For example, the means can comprise a movement system configured to move the one or more laser emission heads 25.

Advantageously, the movement system is also configured to move the pressure roller 14 and the positioner/conveyor roller together with one or more laser emission heads 25.

In further detail, during the surface fusion step, a first laser beam 12 and a second laser beam 13 are emitted, in particular simultaneously.

In particular, the laser device 11 is configured to emit the first laser beam 12 and the second laser beam 13.

The first laser beam 12 is focused in the area of the irradiation station 9 on a first cavity 15 interposed between the first zone 17 and the second zone 18 to superficially fuse the first zone 17 and the second zone 18, and the second laser beam 13 is focused in the area of the irradiation station 9 on a second cavity 16 interposed between the third zone 19 and the fourth zone 20 to superficially fuse the third zone 19 and the fourth zone 20.

In particular, the geometric constancy of each cavity is guaranteed with the aid of the positioner/conveyor roller (not specifically illustrated).

Advantageously, the laser device 11 can comprise an optical system for focusing the first laser beam 12 and the second laser beam 13 on the first cavity and the second cavity.

Furthermore, in such a way as to be able to apply metallic perimeter edge bands 6 to semi-finished sandwich panels 1 of different thickness, the optical system is configured so that it is possible to modify a respective transverse position of the respective focus of the first laser beam 12 and/or the second laser beam 13.

Furthermore, the optical system is also configured to modify the respective position of the respective focus of the first laser beam 12 and/or the second laser beam 13 in the case of a semi-finished sandwich panel 1 with variable thickness.

Advantageously, the optical system is configured to modify the respective position of the respective focal point of the first laser beam 12 and maintain the position of the respective focus of the second laser beam 13 fixed.

Advantageously, the method also comprises a conditioning step, in particular carried out together with the surface fusion step, during which a flow of an inert gas is directed (continuously) to the irradiation station 9. In particular, the flow of gas guarantees that the fusion of the first zones, second zones, third zones and fourth zones is carried out in a controlled atmosphere defined by the presence of the inert gas.

Advantageously, the edge banding machine 7 comprises one or more nozzles configured to emit the flow of inert gas and a feeding unit configured to feed the inert gas to the one or more nozzles. By way of example, an inert gas can be nitrogen.

The method can also comprise a treatment step, in particular carried out prior to the surface fusion step, configured to remove oxide and/or any organic contaminations from the metal surfaces of the first metal layer 2, of the second metal layer 3 and of the edge band strip 8 which will subsequently undergo the surface fusion steps. In other words, during the treatment step, the first zones, the second zones, the third zones and the fourth zones are treated to remove oxide and/or any organic contaminations.

By way of non-limiting example, this treatment step can be performed with the aid of lasers incident on the surfaces, carrying out a so called corona treatment process.

This treatment step is particularly advantageous when the first metal layer 2 and/or the second metal layer 3 and/or the edge band strip 8 entail the use of aluminium.

In further detail, during the advancement step, the semi-finished sandwich panel 1 is advanced by means of an advancement device of the edge banding machine 7. For example, the advancement device comprises a dual conveyor belt which retains the semi-finished sandwich panel 1 between the two opposite surfaces of the two conveyor belts.

The advancement device is also configured to advance, during the feeding step, the edge band strip 8 along the auxiliary path Q.

More specifically, the edge band strip 8 is advanced in synchrony with the advancement of the semi-finished sandwich panel 1 thanks to the advancement of the semi-finished sandwich panel 1 to which the edge band strip 8 is integrally welded.

In particular, the edge band strip 8 is rolled up and is unrolled during the feeding step.

Advantageously, during the contact step, the contact between the edge band strip 8 and the first metal layer 2 and the second metal layer 3 is guaranteed by an application device, in particular a pressure roller 14 of the application device.

In particular, the pressure roller 14 is arranged downstream of the conveyor roller.

In particular, during the contact step, the pressure roller 14 exerts a pressure, in particular on the edge band strip 8, to bring the first zone 17 and the second zone 18 into contact with each other and to bring the third zone 19 and the fourth zone 20 into contact with each other.

In particular, the pressure roller 14 is arranged at the contact station 10.

The method can also comprise a removal step, for example carried out by milling and/or abrasion, during which portions of the edge band strip 8 (which has now become the perimeter edge band 6) that protrude out of the edged sandwich panel 5 are removed. Said protrusions can be in a longitudinal and/or transverse direction.

In the case of protrusions in a transverse direction, the edge band strip 8 has a height greater than the thickness of the edged sandwich panel 5. In the case of protrusions in the longitudinal direction, the edge band strip 8 is longer than the edged sandwich panel 5.

It should be noted that the method is repeated for more than one side of the semi-finished sandwich panel 1.

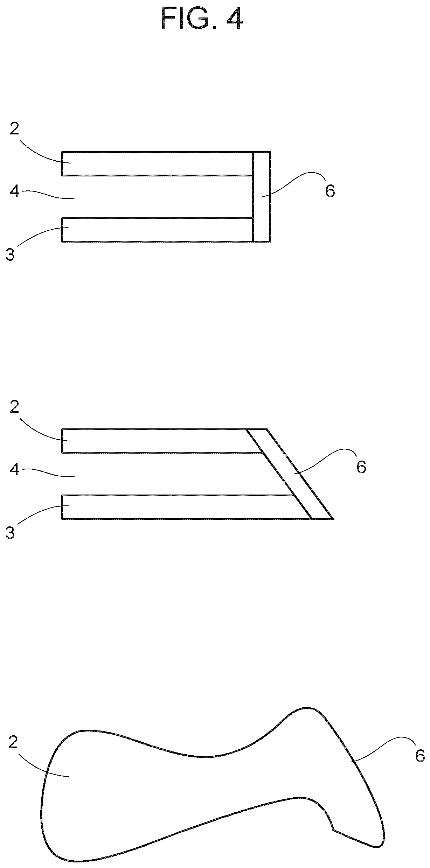

It should be noted that in the example of the Figures from 1 to 3B, the perimeter edge band 6 has a straight linear shape. However, as indicated in Figure 4, different shapes are also possible such as, for example, an inclined straight linear perimeter edge band 6 or a curvilinear perimeter edge band 6.

In particular, for example in the case of a curvilinear perimeter edge band 6, the method can entail inducing a relative movement between the semi-finished sandwich panel 1 by means of a movement of the laser device 11 and of the application device, in particular of the pressure roller 14. Furthermore, preferably the advancement step and the feeding step are not carried out. In particular, according to such a variation, the semi-finished sandwich panel 1 is positioned at a fixed processing station, the edge band strip 8 is positioned adjacent to the semi-finished sandwich panel 1 and the surface fusion step and the contact step are carried out.

According to such a variation, the edge banding machine 7 can comprise a movement device configured to move the laser device 11 and the application device to induce a relative movement between the laser device 11 and the sandwich panel 1 and the edge band strip 8. In particular, the edge banding machine can be configured to keep the sandwich panel 1 in a fixed position during a movement of the laser device 11 and the application device.

Furthermore, thanks to the movement of the laser device 11 and the application device, it is possible to carry out a continuous welding between the edge band strip 8 and the first layer 2 and the second layer 3.

In particular, according to this variation, the irradiation station 9 is movable. Furthermore, each first zone 17 and each third zone 19 are brought into contact, respectively, with the respective second zone 18 and the respective fourth zone 20 in the area of a movable contact station.

However, a first laser beam 12 and a second laser beam 13 is always generated as previously described. Furthermore, the first laser beam 12 and the second laser bean 13 are focused in the area of the irradiation station 9, on the first cavity 15 and the second cavity 16 respectively.

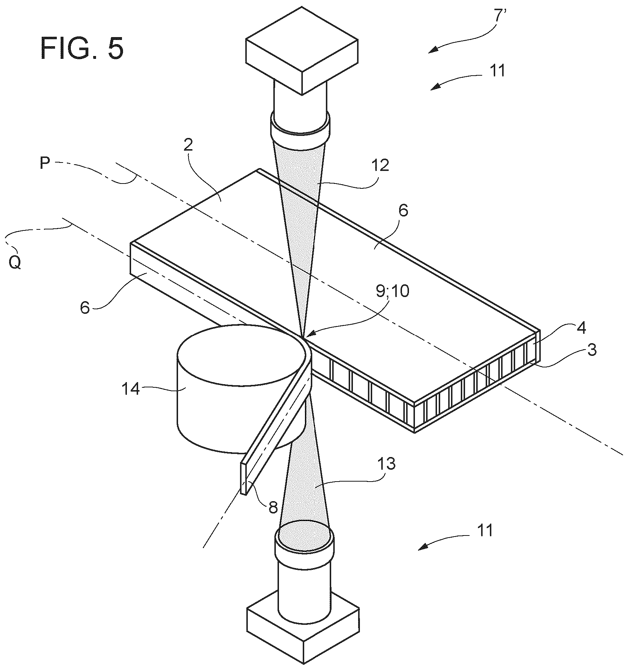

With reference to Figure 5, an alternative edge banding machine 7' is schematically illustrated for performing a method according to a second embodiment of the present invention.

The method of the second embodiment is similar to the method according to the first embodiment described above.

Below, we describe the differences between the method of the second embodiment and that of the first embodiment.

In particular, based on the second embodiment, the contact step is performed simultaneously with the surface fusion step.

Furthermore, each first zone 17 and the respective second zone 18 are positioned adjacent, but not facing each other, and each third zone 19 and the respective fourth zone 20 are positioned adjacent, but not facing each other.

Furthermore, the respective first laser beam 12 and the respective second laser beam 13 induce a surface fusion, respectively, of the first zones 17 and the respective second zones 18 and of the third zones 19 and the respective fourth zones 20.

In particular, each second zone 17 and each fourth zone 20 are located on a respective face, respectively, of the first metal layer 2 and the second metal layer 3 opposite the respective face that faces the core 4.

Furthermore, the respective directions and the respective orientations of the first laser beam 12 and the second laser beam 13 are (substantially) opposite.

Preferably, the first laser beam 12 and the second laser beam 13 describe an inclination, in particular a positive inclination, with respect to the plane of the semi-finished sandwich panel 1.

Advantageously, each of the first laser beam 12 and the second laser beam 13 describe together with the plane of the semi-finished sandwich panel 1 a respective angle greater than 85° and smaller than 90°.

The latter can be obtained by means of two separate laser devices or a suitable optical system.

From an examination of the characteristics of the method according to the present invention, the advantages it offers are evident.

The method allows the production of edged sandwich panels 5 having a metallic perimeter edge band 6 without the use of adhesives.

In particular, the method entails the creation of metallic perimeter edge bands 6 welded to the first layer 2 and to the second layer 3 without interruption. It is therefore possible to carry out surface treatments on the entire edged sandwich panel 5, which are otherwise not possible.

Furthermore, the method allows the creation of sandwich panels 5 that have improved mechanical characteristics, in particular sandwich panels 5 that have increased resistance to flexion.

Furthermore, the method allows edged sandwich panels 5 to be obtained that can be exposed to further surface treatments such as, for example, post edge banding anodization, without entailing, for example, problems connected with delamination of the lateral edges or defects resulting from the presence of a glue line interposed between metal surfaces of the panel and edge band strip.

Lastly, it is clear that modifications and variations that do not depart from the protective scope defined by the claims can be made to the method described and illustrated here.

## Claims

1. A method for producing edged sandwich panels (5) from a semi-finished sandwich panel (1) having at least a first metal layer (2), a second metal layer (3) and an inner core (4) interposed between the first metal layer (2) and the second metal layer (3);
the method comprises:
- a surface fusion step, during which a first zone (17) of a metal edge band strip (8), a second zone (18) of the first metal layer (2), a third zone (19) of the edge band strip (8), and a fourth zone (20) of the second metal layer (3) are superficially fused by a laser radiation; and
- a pressure contact step, during which the first zone (17) and the third zone (19) of the edge band strip (8) are brought into contact with, respectively, the second zone (18) of the first metal layer (2) and the fourth zone (20) of the second metal layer (3);
wherein during the surface fusion step a first laser beam (12) and a second laser beam (13) are emitted;
wherein the first laser beam (12) is focused in the area of the irradiation station (9) on a first cavity (15) interposed between the first zone (17) and the second zone (18) to superficially fuse the first zone (17) and the second zone (18); and
wherein the second laser beam (13) is focused in the area of the irradiation station (9) on a second cavity (16) interposed between the third zone (19) and the fourth zone (20) to superficially fuse the third zone (19) and the fourth zone (20).

2. The method according to claim 1, wherein the pressure contact step is performed following the surface fusion step or the surface fusion step is performed at the same time as the pressure contact step.

3. The method according to claim 1 or 2, wherein a relative motion is induced between the laser radiation and the semi-finished sandwich panel (1) and the edge band strip (8), and the surface fusion step and pressure contact step are repeated.

4. The method according to any one of the preceding claims, also comprising:
- an advancement step, during which the semi-finished sandwich panel (1) is advanced along an advancement path (P) and through an irradiation station (9) and a contact station (10) arranged downstream of the irradiation station (9) along the advancement path (P); and
- a feeding step, during which the edge band strip (8) is fed to the contact station (10) at which the edge band strip (8) is brought into contact with the first metal layer (2) and the second metal layer (3);
wherein during the surface fusion step, the first zone (17) of the edge band strip (8), the second zone (18) of the first metal layer (2), the third zone (19) of the edge band strip (8) and the fourth zone (20) of the second metal layer (3) are superficially fused by the laser radiation at the irradiation station (9);
wherein during the pressure contact step, the first zone (17) and the second zone (18) of the edge band strip (8) are brought into contact with the third zone (19) of the first metal layer (2) and the fourth zone (20) of the second metal layer (3) at the contact station (10), respectively.

5. The method according to claim 4, wherein the surface fusion step, the pressure contact step, the advancement step and the feeding step are carried out continuously.

6. The method according to any one of the preceding claims, wherein during the surface fusion step the laser radiation is emitted from a fixed laser device (11) and/or wherein the irradiation station (9) is fixed.

7. The method according to any one of the preceding claims, wherein during the surface fusion step the laser radiation is emitted from a laser device (11), preferably a fibre laser device.

8. The method according to any one of the preceding claims, further comprising a conditioning step, during which a flow of an inert gas is directed to the irradiation station (9).

9. The method according to any of the preceding claims, further comprising a treatment step performed prior to the surface fusion step and during which oxide and/or organic contamination is removed from each first zone (17), each second zone (18), each third zone (19) and each fourth zone (20).

10. The method according to any one of the preceding claims, wherein during the pressure contact step a pressure is exerted by means of a pressure roller (14) so as to bring the first zone (17) and the second zone (18) into contact with each other and to bring the third zone (19) and the fourth zone (20) into contact with each other, resulting in welding between the parts; and/or
wherein during the feeding step the edge band strip (8) is advanced along an auxiliary path (Q).

11. The method according to any of the preceding claims, wherein the inner core (4) comprises a metal material, a metal honeycomb structure, an expanded foam, a thermoplastic, a thermoset, an open-cell structured foam, a closed-cell structured foam, a balsa wood, a syntactic foam, a self-expanding component, a honeycomb structure, ceramic materials, aramid fibres and/or foams, and/or a self-expanding component; and/or
wherein the first metal layer (2), the second metal layer (3) and the edge band strip (8) comprise a metal material chosen from the group of aluminium, aluminium alloys, brass, steel, steel alloys, titanium, copper, and bronze.

12. A sandwich panel (5) having a first metal layer (2), a second metal layer (3), an inner core (4) interposed between the first metal layer (2) and the second metal layer (3) and a metallic perimeter edge band (6) connected by welding to the first metal layer (2) and the second metal layer (3);
wherein the sandwich panel (5) comprises a first continuous annular perimeter welding which connects the first metal layer (2) to the perimeter edge band (6) and a second continuous annular perimeter welding which connects the second metal layer (2) to the perimeter edge band (6);
in particular, the sandwich panel (5) is produced according to a method according to any one of the preceding claims.

13. An edge banding machine (7, 7') for producing edged sandwich panels (5) from a semi-finished sandwich panel (1) having at least a first metal layer (2), a second metal layer (3) and an inner core (4) interposed between the first metal layer (2) and the second metal layer (3);
the edge banding machine (7) comprises:
- a laser device (11) configured to superficially fuse a first zone (17) of a metal edge band strip (8), a second zone (18) of the first metal layer (2), a third zone (19) of the edge band strip (8), and a fourth zone (20) of the edge band strip (8) by laser radiation at an irradiation station (9); and
- an application device (14) configured to bring the first zone (17) and second zone (18) of the edge band strip (8) into contact with, respectively, the third zone (19) of the first metal layer (2) and the fourth zone (20) of the second metal layer (3) at a contact station (9);
wherein the edge banding machine (7) comprises a control unit configured to control:
- the laser device (11) so as to carry out a surface fusion step, during which a first zone (17) of a metal edge band strip (8), a second zone (18) of the first metal layer (2), a third zone (19) of the edge band strip (8) and a fourth zone (20) of the second metal layer (3) are superficially fused by laser radiation; and
- the application device (14) so as to carry out a pressure contact step, during which the first zone (17) and the third zone (19) of the edge band strip (8) are brought into contact, respectively, with the second zone (18) of the first metal layer (2) and the fourth zone (20) of the second metal layer (3);
wherein the control unit is configured to control the laser device (11) so that during the surface fusion step the laser device (11) emits:
- a first laser beam (12) focused in the area of the irradiation station (9) on a first cavity (15) interposed between the first zone (17) and the second zone (18) to superficially fuse the first zone (17) and the second zone (18); and
- a second laser beam (13) focused in the area of the irradiation station (9) on a second cavity (16) interposed between the third zone (19) and the fourth zone (20) to superficially fuse the third zone (19) and the fourth zone (20).

14. The edge banding machine according to claim 13, further comprising:
- an advancement device configured to advance the semi-finished sandwich panel(1) along an advancement path (P) and through a contact station (9) and an irradiation station (9) arranged upstream of the contact station (10) along the advancement path (P) and a feeding device configured to feed an edge band strip (8) made of metal material to the contact station (9) at which the edge band strip (8) is brought into contact with the first metal layer (2) and the second metal layer (3); and/or
- a movement device configured to move the laser device (11) and the application device to induce a relative movement between the laser device (11) and the sandwich panel (1) and the edge band strip (8).

15. The edge banding machine according to claim 13, comprising a movement device configured to move the laser device (11) and the application device to induce a relative movement between the laser device (11) and the sandwich panel (1) and the edge band strip (8);
wherein the edge banding machine is configured to maintain the sandwich panel (1) in a fixed position during the operation of the laser device (11) and the application device.
